# FASCICULE DE BREVET EUROPEEN

(11) **EP 2 926 350 B1**
(45) Date de publication et mention de la délivrance du brevet: **24.08.2016**
(21) Numéro de dépôt: 13808101.3
(22) Date de dépôt: 25.11.2013
(51) Int. Cl.: H01F 38/02

(54) **DISPOSITIF MAGNETOTHERMIQUE DE LIMITATION DE COURANT**
MAGNETOTHERMISCHE STROMBEGRENZUNGSVORRICHTUNG
MAGNETOTHERMAL CURRENT LIMITING DEVICE

(30) Priorité: 03.12.2012 FR 1261533
(43) Date de publication de la demande: 07.10.2015
(73) Titulaire: Schneider Electric Industries SAS, 92500 Rueil-Malmaison (FR)
(72) Inventeur: SCHUSTER, Philippe, F-38050 Grenoble Cedex 09 (FR); CAILLAULT, Nathalie, F-38050 Grenoble Cedex 09 (FR)
(74) Mandataire: Tripodi, Paul
(86) Numéro de dépôt international: PCT/FR2013/052837
(87) Numéro de publication internationale: WO 2014/087074

(56) Documents cités:
- US-A1- 2011 030 939

## Description

### DOMAINE TECHNIQUE

L'invention concerne la protection de lignes électriques. En particulier, l'invention se rapporte à des dispositifs limitant le courant dans les installations électriques, notamment basse tension.

### ETAT DE LA TECHNIQUE

Dans les réseaux de distribution électrique, la présence d'un défaut peut entraîner la circulation de courants élevés qui peuvent endommager des appareillages de la ligne. Pour les protéger, une des solutions est la mise en place d'appareils de coupure de type disjoncteur : lorsque le seuil de tolérance de l'appareillage est dépassé, il est mis hors circuit par ouverture des contacts du disjoncteur coupant la ligne. Une autre option est la mise en place de dispositifs statiques, sans ouverture de contacts, par exemple l'insertion d'une impédance élevée, qui présente cependant l'inconvénient de modifier les caractéristiques de la ligne y compris en mode de fonctionnement normal.

Pour éviter cet inconvénient ont été développés des dispositifs limiteurs de courant dont le comportement diffère selon que le courant dépasse ou non un seuil. Ainsi les documents WO 2006/003111 ou WO 2012/013237 présentent-ils un enroulement bobiné autour d'un aimant dont les caractéristiques magnétiques sont choisies pour que la magnétisation dépende du courant dans la bobine de façon à permettre une modification du courant y circulant, et par extension une limitation du courant circulant dans la ligne qui lui est raccordée.

Un axe de développement des dispositifs limiteurs de courant concerne l'utilisation de matériaux supraconducteurs, dont l'impédance varie avec la température. L'une des options, tel que décrit dans WO 2005/006455, concerne ainsi l'insertion directe d'un élément supraconducteur dans une ligne électrique : sous courant nominal, le supraconducteur présente une impédance nulle et n'influe pas sur la ligne ; lorsque le courant dépasse une valeur seuil, l'impédance augmente fortement, et le courant est limité. Ce type de solution semble cependant *approprié* principalement pour de la transmission à haute tension compte tenu de la complexité et du coût des infrastructures cryogéniques à mettre en oeuvre.

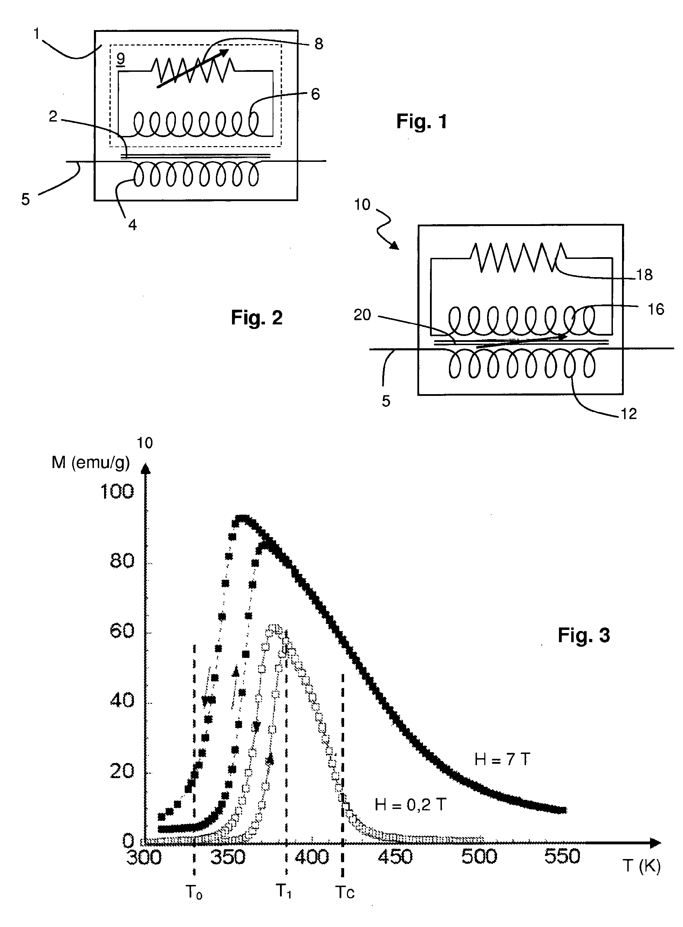

Une autre approche concerne l'utilisation de dispositifs de limitation de courant de type inductif dont le secondaire est muni d'un élément supraconducteur, tel qu'illustré en figure 1. Un tel dispositif de limitation 1 est basé sur le principe du transformateur, avec un circuit magnétique 2 couplant un enroulement primaire 4 qui est relié à la ligne 5 à protéger et un enroulement secondaire 6 connecté à un circuit de résistance variable en raison de la présence d'un élément supraconducteur 8. Sous courant nominal, l'enroulement secondaire 6, alors non résistif, n'exerce aucun effet sur la ligne 5 ; le secondaire 6 devient résistif sous courant de défaut, par franchissement de la caractéristique critique du matériau 8 dépendant de sa température, du champ magnétique appliqué et du courant, et sa résistance 8 se reflète dans le primaire 4 dont le courant est limité.

Ce type de dispositif 1 à supraconducteur 8 présente cependant l'inconvénient majeur de nécessiter un environnement 9 cryogénique, classiquement de l'azote ou de l'hélium liquides, qui rend son utilisation problématique ; les températures en jeu entraînent en outre des contraintes sur les soudures ou autres connexions. L'encombrement notable, le coût de fonctionnement et la maintenance impérative pour ce type de dispositif 1 rendent son utilisation envisageable pour la moyenne et la haute tension, mais très peu probable pour la basse tension.

### EXPOSE DE L'INVENTION

Parmi autres avantages, l'invention vise à pallier des inconvénients des limiteurs de courant existants. En particulier, l'invention propose un dispositif de limitation de courant à mettre en place sur une ligne électrique ne nécessitant pas de moyens cryogéniques et n'altérant pas l'impédance du circuit sous courant nominal, particulièrement adapté pour la basse tension.

Sous un de ses aspects, l'invention se rapporte ainsi à un dispositif de limitation de courant de type inductif, comprenant un circuit magnétique couplant un primaire destiné à être relié à la ligne à protéger et comprenant avantageusement deux bornes de raccordement à ses extrémités, et un secondaire associé à une résistance de limitation, dont la valeur ramenée au primaire est égale à la tension du réseau divisée par la valeur souhaitée pour le courant limité. Chacun des primaire et secondaire peut comprendre un bobinage, notamment en fil de cuivre, autour du circuit magnétique, qui est de préférence sous forme de tore.

Selon l'invention, le circuit magnétique comprend un matériau magnétothermique (ou magnétocalorique), c'est-à-dire un matériau dont la magnétisation augmente avec la température au dessus d'une première température supérieure ou égale à 330 K, et notamment présente un pic dont le maximum est supérieur à 40 emu/g, et croît avec le champ magnétique appliqué, avec augmentation rapide de la magnétisation entre 350 K et une température inférieure ou égale à 420 K sous champ magnétique de 0,2 à 2 T. Le matériau magnétocalorique est en particulier un alliage de nickel et manganèse, de préférence du type du type NiCoMnX, avec X choisi parmi l'aluminium, l'indium, l'antimoine ou l'étain.

Le circuit magnétique peut être composé dans sa totalité dudit matériau magnétocalorique ; avantageusement, afin de moduler au mieux les paramètres de fonctionnement du dispositif de limitation, le circuit magnétique peut être formé de premières portions de matériau magnétocalorique, et de deuxièmes portions de matériau « neutre », dont la magnétisation est indépendante de la température, de préférence un matériau magnétique. Les premières et deuxièmes portions peuvent par exemple être des secteurs alternés du circuit magnétique, comme deux fois deux quarts de tore, ou être mélangées aléatoirement au sein du matériau le composant.

### BREVE DESCRIPTION DES FIGURES

D'autres avantages et caractéristiques ressortiront plus clairement de la description qui suit de modes particuliers de réalisation de l'invention, donnés à titre illustratif et nullement limitatifs, représentés dans les figures annexées.
La figure 1, déjà décrite, illustre un limiteur inductif à supraconducteur.
La figure 2 montre un dispositif selon l'invention, en relation avec le limiteur inductif de la figure 1.
La figure 3 montre les caractéristiques du matériau qui peut être utilisé dans le circuit magnétique d'un limiteur selon l'invention.
Les figures 4A et 4B représentent des dispositifs de limitation selon deux modes de réalisation de l'invention.

### DESCRIPTION DETAILLEE D'UN MODE DE REALISATION PREFERE

Le dispositif selon l'invention reprend le principe du limiteur inductif supraconducteur décrit précédemment en relation avec la figure 1. Cependant, la valeur de la résistance du circuit secondaire n'est pas modifiée par le courant : le passage d'un courant dépassant un seuil modifie le couplage magnétique en changeant la magnétisation du circuit magnétique, tel qu'indiqué en figure 2.

En particulier, le matériau du circuit magnétique est choisi pour ses propriétés magnétothermiques, ou magnétocaloriques. Plus précisément, tel qu'illustré en figure 3, le matériau est tel que son degré de magnétisation M présente un pic en fonction de la température. Notamment, à basse température, le matériau est peu, voire pas, magnétique. Lorsque la température augmente, au-delà d'une première température T₀, la magnétisation M du matériau augmente rapidement, pour atteindre un maximum à une deuxième température T₁, au-delà de laquelle la magnétisation diminue jusqu'à s'annuler pour la température de Curie Tc du matériau. Ces différentes températures T₀, T₁, Tc dépendent elles-mêmes du champ magnétique H appliqué (voir les variations obtenues pour un champ de 0,2 T et un champ de 7 T en figure 3).

Pour une utilisation selon l'invention, la première température T₀ est choisie supérieure à 330 K, de préférence proche de 350 K. Ce choix est rendu possible par l'utilisation de matériaux de la famille NiCoMnX, avec X ∈ {Al, In, Sb, Sn}, de préférence aluminium ou étain : pour ces matériaux, la transition est bien marquée avec une température T₁ proche de T₀ (écart de 10 à 30 K) et une magnétisation élevée, de l'ordre de 70 emu/g. Notamment, pour Ni₄₀Co₁₀Mn₃₃Al₁₇, on a T₀ = 347 K, Mmax = 90 emu/g.

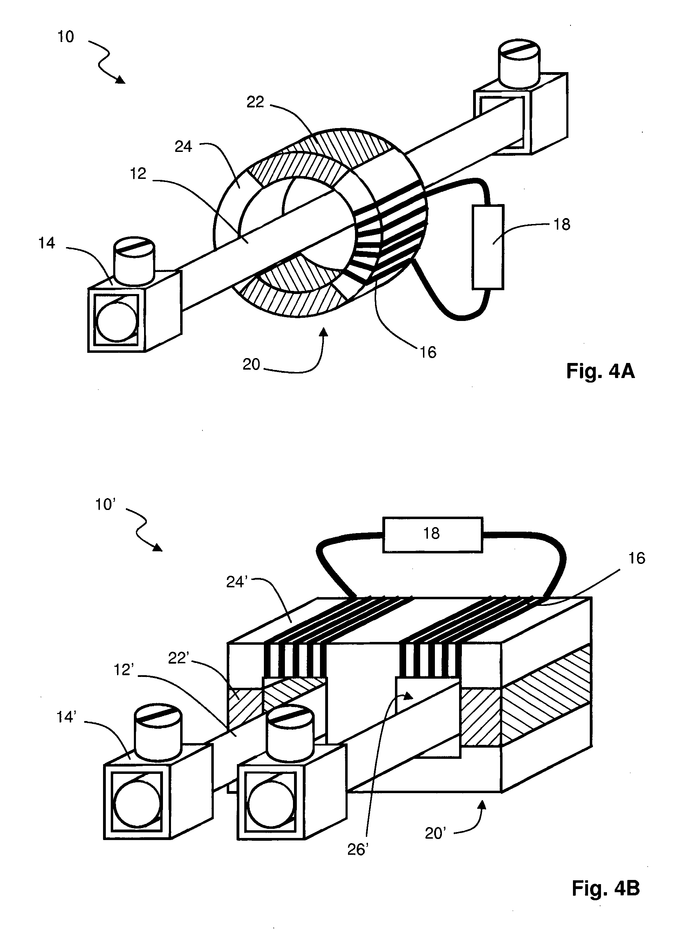

En particulier, selon un mode de réalisation préféré illustré en figure 4A, le dispositif de limitation 10 selon l'invention comprend un conducteur primaire 12, muni à ses extrémités de moyens de couplage 14 sur la ligne électrique 5 à protéger, notamment des bornes de raccordement. Le primaire 12 est couplé magnétiquement à un secondaire 16, qui comprend une résistance de limitation 18 dont les caractéristiques sont paramétrées en fonction du résultat, avec notamment la résistance de limitation 18 du secondaire 16 ramenée au primaire 12 égale à la tension du réseau divisée par la valeur souhaitée pour le courant limité. Le couplage est réalisé au moyen d'un tore magnétique 20 traversé par les deux conducteurs primaire et secondaire 12, 16. Dans le mode de réalisation illustré, le primaire 12 est sous forme d'un conducteur filaire qui traverse le tore une seule fois, alors que le secondaire 16 est bobiné plusieurs fois autour du tore 20.

En présence d'un courant nominal dans le primaire 12, le dispositif de limitation 10 fonctionne de la façon usuelle, avec couplage magnétique standard défini par la section des conducteurs 12, 16, la valeur de la résistance 18 et les caractéristiques prédéfinies du circuit magnétique 20, dont la magnétisation est constante à température ambiante d'utilisation, notamment entre -30°C et +50°C.

Lorsque le courant dans la ligne 5 augmente, notamment lorsqu'il dépasse une valeur de défaut, le primaire 12 s'échauffe par effet Joule, et l'effet thermique ainsi produit entraîne une augmentation de la température au sein du circuit magnétique 20 qui dépasse sa température T₀ de changement de phase. Le matériau se magnétise, et cette transition non-magnétique / magnétique conduit à une modification du coefficient de couplage du transformateur 10. Du fait de ce changement de couplage, la résistance 18 du circuit secondaire ramenée au primaire augmente et fait donc chuter le courant dans le circuit primaire 12.

Avantageusement, un contact thermique direct est assuré entre le circuit magnétique 20 et le conducteur 12 : de fait, le matériau magnétocalorique voit son état magnétique dépendre principalement de la température. Il est à noter cependant que le circuit magnétique 20 voit son état magnétique également dépendre du champ magnétique auquel il est soumis, c'est-à-dire notamment du champ induit par le primaire 12 : l'augmentation du courant primaire conduit à une élévation du champ H, et une modification de la courbe de magnétisation avec notamment une augmentation de l'aimantation (voir figure 3). Ainsi, la transition non-magnétique/magnétique est d'autant plus marquée que le courant primaire est plus élevé et l'effet de limitation s'en trouve renforcé, du fait du renforcement du couplage primaire/secondaire.

Le dimensionnement du système 10 permet ainsi de positionner la valeur correspondante de courant de surcharge dans le primaire 12 pour localiser, en fonction du champ induit, la température générée au niveau du tore 20 dans la plage [T₀, T₁] de transition de phase non magnétique / magnétique du matériau. En particulier, il est possible d'agir sur la section et le nombre de spires des circuits électriques primaire et secondaire 12, 16, sur la valeur de la résistance 18 au secondaire, ainsi que sur la longueur et la section du circuit magnétique 20.

Par ailleurs, tel qu'illustré également en figure 4A, il est possible de modifier la proportion de matériau actif dans le circuit magnétique 20 de façon à optimiser le coefficient de couplage et affiner les paramètres de fonctionnement du limiteur 10. En particulier, selon le mode de réalisation illustré, le circuit magnétique 20 comprend une alternance de secteurs 22 en matériau magnétothermique, et de secteurs 24 de matériau inerte vis-à-vis de la température. De préférence, les secteurs magnéto-stables sont formés par un matériau ferromagnétique quelle que soit la température, pour assurer un bon couplage et donc une limitation optimale lors de l'augmentation de la température.

Alternativement, le circuit magnétique 20 peut être formé de premières portions 22 de matériau magnétocalorique disséminées au sein d'une matrice 24 de matériau ferromagnétique. Toute autre alternative est possible pour la répartition des premières portions magnétocaloriques 22 et des deuxièmes portions de magnétisation stable thermiquement. En particulier il est possible d'utiliser, pour le circuit magnétique de couplage, un empilement de tôles découpées avec alternance de tôles ferromagnétiques (FeSi, FeNi, FeCo) et de tôles magnétocaloriques (NiMnCoX) : les propriétés sont alors ajustées soit par l'épaisseur relative des tôles des deux sortes, soit par le nombre de tôles de chaque sorte. Les circuits primaire et secondaire peuvent quant à eux être réalisés dans tout matériau conducteur, notamment cuivre ou aluminium.

Le dispositif 10 selon l'invention permet ainsi une limitation du courant par changement d'état du circuit magnétique 20, obtenu directement par la variation rapide des propriétés du matériau lors d'une transition de phase déclenchée par les effets du courant de défaut, qui se produit ainsi à température ambiante, donc sans nécessiter de dispositif cryogénique.

Ces propriétés de changement d'état peuvent également être utilisées dans l'insertion directe d'une inductance dans la ligne à protéger pour remplacer un supraconducteur par un matériau magnétothermique : ladite inductance passe également de l'état amagnétique à l'état magnétique en fonction du courant circulant dans la ligne elle-même, pour modifier en retour la valeur dudit courant. Ce mode de réalisation a alors pour avantage de limiter également un courant continu, mais il nécessite un primaire bobiné ce qui accroit la dissipation en fonctionnement normal.

Bien que l'invention ait été décrite en référence à un dispositif de limitation 10 à circuit magnétique torique, elle ne s'y limite pas. En particulier, tel qu'illustré en figure 4B, un limiteur 10' selon l'invention peut comprendre deux bornes 14' alignées : le primaire 12 comprend plus d'un passage à travers le circuit magnétique 20', qui peut par exemple être en forme de huit pour s'insérer autour des branches d'un U formant circuit primaire 12'. Notamment, le circuit magnétique 20' peut être un parallélépipède magnétique 24' muni de deux orifices 26', les parois sur un côté au niveau de ces orifices 26' étant formées par du matériau magnétocalorique 22'. Le secondaire est de préférence bobiné le même nombre de fois au niveau de chacun des orifices 26'. Toute autre alternative de réalisation est possible.

## Revendications

1. Dispositif de limitation de courant (10) comprenant un primaire (12) susceptible d'être raccordé à une ligne électrique (5), un secondaire (16) comprenant une résistance de limitation (18), et un circuit magnétique (20) de couplage des primaire et secondaire (12, 16), **caractérisé en ce que** le circuit magnétique (20) comprend un matériau magnétocalorique (22) dont la magnétisation augmente avec la température au dessus d'une première température (T₀) supérieure ou égale à 330 K.

2. Dispositif selon la revendication 1 dans lequel le matériau magnétocalorique (22) est un alliage de nickel et manganèse.

3. Dispositif selon la revendication 2 dans lequel le matériau magnétocalorique (22) est du type NiCoMnX, avec X ∈ {Al, In, Sb, Sn}.

4. Dispositif selon l'une des revendications 1 à 3 dans lequel la magnétisation du matériau atteint un maximum à une deuxième température (T₁) inférieure à 420 K, ledit maximum de magnétisation étant supérieur à 40 emu/g.

5. Dispositif selon la revendication 4 dans lequel le matériau magnétocalorique est choisi pour que son maximum de magnétisation augmente avec le champ magnétique (H) appliqué audit matériau (22).

6. Dispositif selon l'une des revendications 1 à 5 dans lequel le circuit magnétique forme un tore (20) avec des premières portions (22) en matériau magnétocalorique et des deuxièmes portions (24) en matériau dont la magnétisation n'est pas modifiée au dessus de la première température (T₀).

7. Dispositif selon la revendication 6 dans lequel les premières et deuxièmes portions (22, 24) alternent pour former des secteurs du tore (20).

8. Dispositif selon l'une des revendications 1 à 7 dans lequel le secondaire (16) comprend un enroulement de fil conducteur autour du circuit magnétique (20).

9. Dispositif selon l'une des revendications 1 à 8 dans lequel la résistance de limitation (18) du secondaire (16) ramenée au primaire (12) est égale à la tension du réseau divisée par la valeur souhaitée pour le courant limité.

10. Dispositif selon l'une des revendications 1 à 9 dans lequel le primaire (12) comprend un conducteur traversant le circuit magnétique (20) et muni de deux bornes de raccordement (14) à ses extrémités.

## Patentansprüche

1. Strombegrenzungsvorrichtung (10), umfassend eine Primärseite (12), die geeignet ist, an eine elektrische Leitung (5) angeschlossen zu werden, eine Sekundärseite (16), umfassend einen Begrenzungswiderstand (18) und einen Magnetkreis (20) zur Kopplung der Primär- und der Sekundärseite (12, 16), **dadurch gekennzeichnet, dass** der Magnetkreis (20) ein magnetokalorisches Material (22) umfasst, dessen Magnetisierung mit der Temperatur über einer ersten Temperatur (T₀) größer oder gleich 330 K zunimmt.

2. Vorrichtung nach Anspruch 1, bei der das magnetokalorische Material (22) eine Legierung von Nickel und Mangan ist.

3. Vorrichtung nach Anspruch 2, bei der das magnetokalorische Material (22) vom Typ NiCoMnX ist, wobei X ∈ {Al, In, Sb, Sn}.

4. Vorrichtung nach einem der Ansprüche 1 bis 3, bei der die Magnetisierung des Materials ein Maximum bei einer zweiten Temperatur (T₁) unter 420 K erreicht, wobei das Magnetisierungsmaximum größer als 40 emu/g ist.

5. Vorrichtung nach Anspruch 4, bei der das magnetokalorische Material derart ausgewählt ist, dass ein Magnetisierungsmaximum mit dem an das Material (22) angelegten Magnetfeld (H) zunimmt.

6. Vorrichtung nach einem der Ansprüche 1 bis 5, bei der der Magnetkreis einen Torus (20) mit ersten Abschnitten (22) aus einem magnetokalorischen Material und zweiten Abschnitten (24) aus einem Material, dessen Magnetisierung über der ersten Temperatur (T₀) nicht verändert wird, bildet.

7. Vorrichtung nach Anspruch 6, bei der die ersten und zweiten Abschnitte (22, 24) alternieren, um Sektoren des Torus (20) zu bilden.

8. Vorrichtung nach einem der Ansprüche 1 bis 7, bei der die Sekundärseite (16) eine Wicklung eines leitenden Drahtes um den Magnetkreis (20) umfasst.

9. Vorrichtung nach einem der Ansprüche 1 bis 8, bei der der Begrenzungswiderstand (18) der Sekundärseite (16), bezogen auf die Primärseite (12), gleich der Spannung des Netzes, geteilt durch den für den begrenzten Strom gewünschten Wert, ist.

10. Vorrichtung nach einem der Ansprüche 1 bis 9, bei der die Primärseite (12) einen Leiter umfasst, der den Magnetkreis (20) durchquert und mit zwei Anschlussklemmen (14) an seinen Enden versehen ist.

## Claims

1. Current limiting device (10) comprising a primary (12) capable of being connected to an electrical line (5), a secondary (16) comprising a limiting resistance (18), and a magnetic circuit (20) for coupling the primary and secondary (12, 16), **characterized in that** the magnetic circuit (20) comprises a magnetocaloric material (22), the magnetization of which increases with temperature above a first temperature (T₀) greater than or equal to 330 K.

2. Device according to Claim 1, wherein the magnetocaloric material (22) is an alloy of nickel and manganese.

3. Device according to Claim 2, wherein the magnetocaloric material (22) is of the NiCoMnX type, where X ∈ {Al, In, Sb, Sn}.

4. Device according to one of Claims 1 to 3, wherein the magnetization of the material reaches a maximum at a second temperature (T₁) of less than 420 K, said magnetization maximum being greater than 40 emu/g.

5. Device according to Claim 4, wherein the magnetocaloric material is chosen in order that its magnetization maximum increases with the magnetic field (H) applied to said material (22).

6. Device according to one of Claims 1 to 5, wherein the magnetic circuit forms a torus (20) with first portions (22) made of magnetocaloric material and second portions (24) made of material for which the magnetization is not modified above the first temperature (T₀).

7. Device according to Claim 6, wherein the first and second portions (22, 24) alternate to form sectors of the torus (20).

8. Device according to one of Claims 1 to 7, wherein the secondary (16) comprises a winding of conducting wire around the magnetic circuit (20).

9. Device according to one of Claims 1 to 8, wherein the limiting resistance (18) of the secondary (16) referred to the primary (12) is equal to the voltage of the network divided by the desired value for the limited current.

10. Device according to one of Claims 1 to 9, wherein the primary (12) comprises a conductor passing through the magnetic circuit (20) and equipped with two connection terminals (14) at its ends.
